# EUROPÄISCHE PATENTSCHRIFT

(11) **EP 2 697 323 B1**
(45) Veröffentlichungstag und Bekanntmachung des Hinweises auf die Patenterteilung: **03.04.2019**
(21) Anmeldenummer: 12713176.1
(22) Anmeldetag: 13.04.2012
(51) Int. Cl.: C09J 4/00, C09J 133/00

(54) **HAFTKLEBSTOFFDISPERSION ENTHALTEND DURCH STUFENPOLYMERISATION HERGESTELLTE POLYMERE MIT UREIDOGRUPPEN ODER MIT UREIDO-ANALOGEN GRUPPEN**
CONTACT ADHESIVE DISPERSION CONTAINING POLYMERS WHICH ARE PRODUCED BY STAGE POLYMERIZATION AND CONTAIN UREIDO GROUPS OR UREIDO-ANALOG GROUPS
DISPERSION D'ADHÉSIF SENSIBLE À LA PRESSION, CONTENANT DES POLYMÈRES PRÉPARÉS PAR POLYMÉRISATION PAR ÉTAPES LESQUELS COMPORTENT DES GROUPES URÉIDO OU ANALOGUES

(30) Priorität: 15.04.2011 US 201161475673 P; 15.04.2011 EP 11162536
(43) Veröffentlichungstag der Anmeldung: 19.02.2014
(73) Patentinhaber: BASF SE, 67056 Ludwigshafen am Rhein (DE)
(72) Erfinder: GERST, Matthias, 67487 Maikammer (DE); WULFF, Dirk, 67105 Schifferstadt (DE); CHRIST, Thomas, 67159 Friedelsheim (DE)
(74) Vertreter: BASF IP Association
(86) Internationale Anmeldenummer: PCT/EP2012/056732
(87) Internationale Veröffentlichungsnummer: WO 2012/140174

(56) Entgegenhaltungen:
- EP-A1- 0 822 206
- EP-A2- 1 323 740
- WO-A2-01/54896
- US-A- 5 652 295
- US-A- 5 744 540
- US-A- 6 031 038
- US-B1- 6 485 601
- US-B1- 6 552 116

## Beschreibung

Die Erfindung gemäß Ansprüchen 1 bis 14 betrifft eine Haftklebstoffdispersion enthaltend ein in Wasser dispergiertes, durch Emulsionspolymerisation gebildetes Polymer P1, gebildet aus einem Monomerengemisch, enthaltend bestimmte C4 bis C20 Alkyl(meth)acrylate, bestimmte (Meth)acrylatmonomere mit Ureidogruppen oder mit Ureido-analogen Gruppen, Säuremonomere und optional weitere Monomere, wobei das Polymer P1 durch Stufenpolymerisation hergestellt ist.

Bei Haftklebstoffen ist sowohl eine gute Haftung zum Substrat (Adhäsion) gewünscht als auch eine ausreichende innere Festigkeit in der Klebstoffschicht (Kohäsion). Bei Adhäsion und Kohäsion handelt es sich um entgegengesetzte anwendungstechnische Eigenschaften. Maßnahmen, die eine Verbesserung der Adhäsion bewirken, führen im Allgemeinen gleichzeitig zu einer Verschlechterung der Kohäsion und umgekehrt. Viele Haftklebstoffe haben zwar bei Raumtemperatur eine ausreichend hohe Kohäsion, nicht jedoch bei erhöhten Temperaturen. Bei vielen Anwendungen, insbesondere bei Klebebändern zur Fixierung von Bauteilen, z.B. im Automobilbereich oder im Baubereich wird aber eine hohe Kohäsion auch bei höheren Temperaturen gewünscht, ohne dass die Adhäsion allzu stark beeinträchtigt wird.

In der WO 01/54896 und in der EP 822206 werden Haftklebstoffe beschrieben, welche durch Emulsionspolymerisation erhältliche Polymere enthalten, die u.a. aus (Meth)acrylmonomeren mit einer Ureidogruppe hergestellt sind. Diese Polymere führen gegenüber Polymeren ohne Ureidogruppen zu einer verbesserten Scherfestigkeit (Kohäsion) und zu einer verbesserten Haftung auch bei erhöhten Temperaturen. Es hat sich herausgestellt, dass Haftklebstoffe auf Basis derartiger Polymere aber noch nicht über eine ausreichende Wasserfestigkeit der damit erzeugten Verklebungen verfügen. Die Wasserfestigkeit kann z.B. durch Messung der Verankerung des Haftklebstoffs auf einer Aluminiumfolie bei Lagerung in Wasser gemessen werden. Wässrige Polymerisatdispersionen, die u.a. aus (Meth)acrylmonomeren mit einer Ureidogruppe hergestellt sind, werden auch in der EP 710680 beschrieben, aber es handelt sich nicht um Haftklebstoffe.

In US 6 031 038, US 6 485 601, US 6 552 116, EP 1 323 740, US 5 652 295 und US 6 605 662 werden weitere Zusammensetzungen und/oder Haftklebstoffe daraus beschrieben, welche durch Polymerisation erhältliche Polymere enthalten, die u.a. aus (Meth)/Acrylmonomeren und/oder Ureido-Gruppe hergestellt sind.

Aufgabe der vorliegenden Erfindung war es, die Klebeeigenschaften von Haftklebstoffen, insbesondere für Klebebänder zur Fixierung von Bauteilen weiter zu verbessern und eine noch bessere Wasserfestigkeit zu erreichen. Demgemäß wurden die unten näher beschriebenen Haftklebstoffdispersionen gefunden.

Gegenstand der gemäß Ansprüchen 1 bis 9 ist eine Haftklebstoffdispersion, enthaltend mindestens ein in Wasser dispergiertes Polymer P1, welches gebildet ist durch Emulsionspolymerisation aus einem Monomergemisch, enthaltend
(a) mindestens 60 Gew.% mindestens eines C4 bis C20 Alkyl(meth)acrylats, welches, wenn es als Homopolymer polymerisiert ist, eine Glasübergangstemperatur von -30 °C oder weniger, vorzugsweise -40°C oder weniger aufweist,
(b) mindestens 0,05 Gew.% mindestens eines (Meth)acrylatmonomeren mit einem Substituenten der Formel 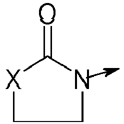 wobei X für CH₂, O, NH oder NR steht und R für eine C1 bis C4-Alkylgruppe steht,
(c) mindestens 0,1 Gew.% mindestens eines Säuremonomers,
   wobei die Angaben der Monomermengen jeweils auf die Summe aller Monomere bezogen sind, und wobei das Polymer P1 durch Polymerisation in mindestens 2 Stufen hergestellt ist, wobei die Glasübergangstemperatur eines Polymers aus Monomeren der ersten Stufe um mindestens 20 °C niedriger, vorzugsweise um mindestens 30°C niedriger liegt als die Glasübergangstemperatur eines Polymeren aus Monomeren einer späteren, zweiten Stufe, und wobei als Monomere der zweiten Stufe entweder Methylmethacrylat, Methylacrylat, Styrol oder Ethylacrylat oder deren Gemisch eingesetzt werden. Die erfindungsgemäße Haftklebstoffdispersion enthält als wesentlichen Bestandteil ein Polymer, welches durch Emulsionspolymerisation hergestellt wird; bei dem dispergierten Polymer handelt es sich daher um ein Emulsionspolymerisat.

Im Folgenden wird die Bezeichnung (Meth)acrylat und ähnliche Bezeichnungen als abkürzende Schreibweise verwendet für "Acrylat oder Methacrylat".

Ein Haftklebstoff ist ein viskoelastischer Klebstoff, dessen abgebundener Film bei Raumtemperatur (20°C) in trockenem Zustand permanent klebrig und klebfähig bleibt. Die Klebung auf Substraten erfolgt sofort durch leichten Anpressdruck. Eine Haftklebstoffdispersion ist eine Zusammensetzung, welche ein in Wasser oder in wässrigem Medium dispergiertes Polymer mit haftklebrigen Eigenschaften enthält.

Das Polymer P1 wird aus einer ersten Monomerart (a) hergestellt. Die Monomerart (a) ist zu mindestens 60 Gew.-%, z.B. von 60 bis 95 Gew.%, bezogen auf die Gesamtmenge der zur Herstellung des Polymers P1 eingesetzten Monomere, enthalten. Die Monomer (a) sind ausgewählt aus denjenigen der C4 bis C20 Alkyl(meth)acrylate, welche, wenn sie als Homopolymere polymerisiert sind, eine Glasübergangstemperatur von -30°C oder weniger oder -40 °C oder weniger, vorzugsweise von -45°C oder weniger aufweisen. Die Glasübergangstemperatur lässt sich durch bekannte Methoden z.B. Differential Scanning Calorimetrie (s. z.B. ASTM 3418/82, sog. "midpoint temperature") bestimmen. Als Monomere (a) bevorzugt sind C₄- bis C₁₀-Alkylacrylate und C₄- bis C₁₀-Alkylmethacrylate, insbesondere C₄- bis C₈-Alkylacrylate und -methacrylate. Ganz besonders bevorzugt sind n-Butylacrylat, n-Hexylacrylat, Octylacrylat und 2-Ethylhexylacrylat oder auch Butadien sowie Mischungen dieser Monomere.

Das Polymer P1 wird aus einer zweiten Monomerart (b) hergestellt. Die Monomerart (b) ist zu mindestens 0,05 Gew.%, z.B. von 0,1 bis 5 Gew.%, vorzugsweise größer 1 Gew.%, z.B. von 1,5 bis 5 Gew.%, bezogen auf die Gesamtmenge der zur Herstellung des Polymers P1 eingesetzten Monomere, enthalten.

Monomerart (b) ist ein (Meth)acrylatmonomer mit einem Substituenten der Formel 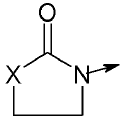 wobei X für CH₂, O, NH oder NR steht und R für eine C1 bis C4-Alkylgruppe steht und der Pfeil am N-Atom die Verknüpfungsstelle des Substituenten an das (Meth)acrylatmonomer bedeutet. Im Falle von X gleich NH oder NR handelt es sich um ein Monomer mit einer Ureidogruppe. Im Falle von X gleich O oder CH₂ werden die Monomere als Monomere mit einer ureido-analogen Gruppe bezeichnet.

Monomere (b) sind z.B. solche der Formel 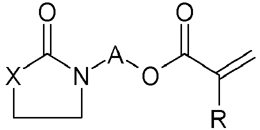 wobei X die oben angegebenen Bedeutung hat, R für Wasserstoff oder Methyl steht und A für eine divalente Verbindungsgruppe steht, vorzugsweise für eine C1 bis C10-Alkylgruppe oder für eine C2 bis C4-Alkylgruppe. Besonders bevorzugt sind Ureidoalkyl(meth)acrylate mit 1 bis 10 C-Atomen, vorzugsweise 2 bis 4 C-Atomen in der Alkylgruppe, insbesondere Ureidoethylmethacrylat (UMA).

Das Polymer P1 wird zu mindestens 0,1 Gew.%, vorzugsweise in Mengen von 0,1 bis 5, besonders bevorzugt 0,2 bis 4, ganz besonders bevorzugt 0,5 bis 3 Gew. %, bezogen auf die Gesamtmenge an Monomeren des Polymers P1, aus Säuremonomeren gebildet. Säuremonomere sind ethylenisch ungesättigte, radikalisch polymerisierbare Monomere, welche mindestens eine Säuregruppe aufweisen. Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha, beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugt sind Acrylsäure und Methacrylsäure und deren Gemisch, besonders bevorzugt ist Acrylsäure.

Das Monomerengemisch zur Bildung des Polymers P1 kann optional weitere, von den Monomeren (a)-(c) verschiedene Monomere (d) enthalten, d.h. die Monomere (d) sind Monomere, welche, wenn sie als Homopolymere polymerisiert sind, eine Glasübergangstemperatur von mehr als -30 °C, insbesondere von mehr als -20°C, mehr als 0°C oder mehr als 20 °C aufweisen. Unter diesen Voraussetzungen können die Monomere (d) ausgewählt sein aus von den Monomeren (a) verschiedenen C1 bis C20 Alkyl(meth)acrylaten, C1 bis C20 Hydroxyalkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren. Die Monomere (d) werden vorzugsweise in Mengen von 1 bis 40 Gew.%, insbesondere von 2 bis 30 Gew.%, bezogen auf die Gesamtmenge an Monomeren des Polymers P1, eingesetzt. Zu nennen sind z. B. (Meth)acrylsäurealkylester mit einem C1-C10-Alkylrest, wie Methylmethacrylat, Methylacrylat, Ethylacrylat, Ethylmethacrylat. Vinylester von Carbonsäuren mit 1 bis 20 C-Atomen sind z. B. Vinyllaurat, -stearat, Vinylpropionat, Versaticsäurevinylester und Vinylacetat. Als vinylaromatische Verbindungen kommen Vinyltoluol, alpha- und para-Methylsty-rol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 2 bis 8 C-Atomen und ein oder zwei olefinischen Doppelbindungen seien Ethylen, Propylen, Isopren und Chloropren genannt. Als weitere Monomere besonders bevorzugt sind Methylacrylat, Methylmethacrylat, Ethylacrylat, Styrol, C1-C10-Hydroxyalkyl(meth)acrylate und (Meth)acrylamid sowie Mischungen dieser Monomere. In einer Ausführungsform werden
0- 5 Gew.%, vorzugsweise 0,05 bis 5 Gew.% an C1-C10-Hydroxyalkyl(meth)acrylaten verwendet.

In einer Ausführungsform der Erfindung ist das Polymer P1 zusätzlich aus mindestens einem Monomer (e) mit mindestens einer Glycidylgruppe gebildet. In einer anderen Ausführungsform der Erfindung handelt es sich um ein Polymerblend aus mindestens einem Polymer P1 und mindestens einem Polymer P2, wobei das Polymer P1 nicht aus Monomeren (e) gebildet ist und das Polymer P2 aus mindestens einem Monomer (e) und optional weiteren Monomeren, aber nicht aus Monomeren des Typs (b) gebildet ist. Selbstverständlich ist auch ein Polymerblend von Polymeren P1 und P2 möglich, wobei sowohl P1 als auch P2 aus Monomeren (e) gebildet sind.

Bevorzugte Monomere (e) mit Glycidylgruppe sind Glycidyl(meth)acrylat (2,3-Epoxypropyl-(meth)acrylat). Besonders bevorzugt ist Glycidylmethacrylat (GMA). Wenn das Monomer (e) Bestandteil des Monomerengemisches zur Bildung des Polymers P1 ist, so liegt es vorzugsweise in einer Menge von 0,1 bis 5 Gew.%, insbesondere von 0,5 bis 3 Gew.% , bezogen auf die Gesamtmenge an Monomeren des Polymers P1, vor. Wenn das Monomer (e) Bestandteil des Monomerengemisches zur Bildung des Polymers P2 ist, so liegt es vorzugsweise in einer Menge von 1 bis 20 Gew.%, insbesondere von 5 bis 15 Gew.% bezogen auf die Gesamtmenge an Monomeren des Polymers P2, vor.

Ein bevorzugtes Polymer P1 ist z. B. wie folgt aufgebaut aus:
60 bis 95 Gew. % der Monomeren (a)
0,1 bis 5 Gew. % der Monomeren (b)
0,1 bis 5 Gew. % der Säuremonomeren (c)
2 bis 30 Gew. % der weiteren Monomeren (d) und
0 bis 5 Gew.% Glycidyl(meth)acrylat.

Ein besonders bevorzugtes Polymer P1 ist z. B. wie folgt aufgebaut aus:
75 bis 90 Gew. % der Monomeren (a)
0,5 bis 3 Gew. % der Monomeren (b)
0,5 bis 2 Gew. % der Säuremonomeren (c)
2 bis 20 Gew. % der weiteren Monomeren (d) und
0 bis 3 Gew.% Glycidyl(meth)acrylat.

Die Glasübergangstemperatur des Polymers P1 beträgt vorzugsweise -60 bis 0°C, besonders bevorzugt -60 bis -10°C und ganz besonders bevorzugt -60 bis -20°C. Die Glasübergangstemperatur lässt sich nach üblichen Methoden wie Differential Scanning Calorimetrie (ASTM 3418/82, sog. "midpoint temperature") bestimmen.

Ein bevorzugtes Polymer P2 ist z. B. wie folgt aufgebaut aus:
80 bis 99 Gew. % der Monomeren (a) und (d)
0,1 bis 5 Gew. % der Säuremonomeren (c)
1 bis 20 Gew.% Glycidyl(meth)acrylat.

In einer Ausführungsform der Erfindung ist das Polymer P2 gebildet durch Polymerisation aus einem Monomergemisch, enthaltend die Monomeren (a), die Monomeren (c), Glycidyl(meth)-acrylat und optional die Monomeren (d) in den für Polymer P1 genannten Mengen.

Die Herstellung der Polymere P1 erfolgt durch eine sogenannte Stufenpolymerisation. Hierbei handelt es sich um eine Polymerisation in mindestens zwei separaten Stufen. In einer früheren (ersten) Stufe wird ein sogenanntes "weiches" Monomer oder ein Monomerengemisch von sogenannten "weichen" Monomeren polymerisiert. In einer späteren (zweiten) Stufe wird ein sogenanntes "hartes" Monomer oder ein Monomerengemisch von sogenannten "harten" Monomeren polymerisiert. Weiche Monomere sind solche, die nach Polymerisation ein Polymer bilden mit einer Glasübergangstemperatur von -30°C oder weniger, vorzugsweise von -40°C oder weniger. "Harte" Monomere sind solche, die nach Polymerisation ein Polymer bilden mit einer Glasübergangstemperatur von mehr als -10°C, vorzugsweise von mehr als 0°C. Die Differenz der Glasübergangstemperaturen von erster Stufe und zweiter Stufe sollte dabei bei mindestens 20°C, vorzugsweise mindestens 30 °C betragen.

Die Menge der Monomere der zweiten Stufe beträgt vorzugsweise 1 bis 10 Gew.% oder 2 bis 6 Gew.%, bezogen auf die Gesamtmenge aller Monomere. In einer bevorzugten Ausführungsform werden in der 2. Stufe entweder Methylmethacrylat (Tg 105 °C), Methylacrylat (Tg 22 °C). Styrol (Tg 107 °C) oder Ethylacrylat (Tg -8 °C) oder deren Gemisch eingesetzt.

Die Herstellung der Polymere P1 kann durch Emulsionspolymerisation erfolgen, es handelt sich dann um Emulsionspolymerisate, wobei die oben genannten ethylenisch ungesättigten, radikalisch polymerisierbaren Monomere durch radikalisch initiierte Emulsionspolymerisation in Wasser polymerisiert werden. Um die Dispergierung der Monomeren in dem wässrigen Medium zu unterstützen, kann man die üblicherweise als Dispergiermittel eingesetzten Schutzkolloide und/oder Emulgatoren verwenden. Die Monomere der zweiten Stufe werden vorzugsweise als reine Monomere, d.h. nicht als Emulsion und ohne Lösungsmittel zugegeben.

Eine ausführliche Beschreibung geeigneter Schutzkolloide findet man in Houben-Weyl, Methoden der organischen Chemie, Band XIV/1, Makromolekulare Stoffe, Georg-Thieme-Verlag, Stuttgart, 1961, Seiten 411 bis 420. Als Emulgatoren kommen sowohl anionische, kationische als auch nichtionische grenzflächenaktive Stoffe in Betracht, deren zahlenmittleres Molekulargewicht üblicherweise unterhalb von 2000 g/mol oder vorzugsweise unterhalb von 1500 g/mol liegt, während das zahlenmittlere Molekulargewicht der Schutzkolloide oberhalb von 2000 g/mol liegt, beispielsweise von 2000 bis 100000 g/mol , insbesondere von 5000 bis 50000 g/mol. Vorzugsweise werden anionische und nichtionische Emulgatoren als grenz-flächenaktive Substanzen verwendet. Geeignete Emulgatoren sind beispielsweise ethoxylierte C₈- bis C₃₆-Fettalkohole mit einem Ethoxylierungsgrad von 3 bis 50, ethoxylierte Mono-, Di- und Tri- C₄- bis C₁₂-Alkylphenole mit einem Ethoxylierungsgrad von 3 bis 50, Alkalimetallsalze von Dialkylestern der Sulfobernsteinsäure, Alkalimetall- und Ammoniumsalze von C₈- bis C₁₂-Alkylsulfaten, Alkalimetall- und Ammoniumsalze von C₁₂- bis C₁₈-Alkylsulfonsäuren und Alkalimetall- und Ammoniumsalze von Cg- bis C₁₈-Alkylarylsulfonsäuren. Kationaktive Emulgatoren sind z.B. Verbindungen mit mindestens einer Amino- oder Ammoniumgruppe und mindestens einer C8-C22-Alkylgruppe. Falls Emulgatoren und/oder Schutzkolloide als Hilfsmittel zum Dispergieren der Monomeren mit verwendet werden, betragen die davon verwendeten Mengen beispielsweise 0,1 bis 5 Gew.-%, bezogen auf die Monomeren. Handelsnamen von Emulgatoren sind z. B. Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25. Die grenzflächenaktive Substanz wird üblicherweise in Mengen von 0,1 bis 10 Gew.-%, bezogen auf die zu polymerisierenden Monomeren verwendet.

Bei der Emulsionspolymerisation werden üblicherweise wasserlösliche Initiatoren für die radikalische Polymerisation der Monomere verwendet. Wasserlösliche Initiatoren für die Emulsionspolymerisation sind z. B. Ammonium- und Alkalimetallsalze der Peroxidischwefelsäure, z. B. Natriumperoxodisulfat, Wasserstoffperoxid oder organische Peroxide, z. B. tert.-Butylhydroperoxid. Geeignet sind auch sogenannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung. Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können auch Polymerisationsregler, kurz Regler, eingesetzt werden. Regler bewirken eine Kettenabbruchsreaktion und verringern somit das Molgewicht des Polymeren. Die Regler werden dabei an das Polymer gebunden, im Allgemeinen an das Kettenende. Die Menge der Regler kann insbesondere 0,05 bis 4 Gew. Teile, besonders bevorzugt 0,05 bis 0,8 Gew.-Teile und ganz besonders bevorzugt 0,1 bis 0,6 Gew. Teile, bezogen auf 100 Gew.-Teile der zu polymerisierenden Monomeren betragen. Geeignete Regler sind insbesondere Verbindungen mit einer Mercaptogruppe wie tert.-Butylmercaptan, Thioglycolsäureethylester, Mercaptoethynol, Mercaptopropyltrimethoxysilan oder tert.-Dodecylmercaptan. Bei den Reglern handelt es sich im Allgemeinen um niedermolekulare Verbindungen mit einem Molgewicht kleiner 2000, insbesondere kleiner 1000 g/mol.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol, Ethanol oder Tetrahydrofuran bestehen. Vorzugsweise wird nur Wasser verwendet. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt. Falls ein Molekulargewichtsregler verwendet wird, kann auch der Regler zum Teil vorgelegt werden, ganz oder teilweise während der Polymerisation oder gegen Ende der Polymerisation zugegeben werden.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81 083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Die Monomeren werden vorzugsweise zumindest teilweise während der Polymerisation kontinuierlich zugegeben. Zum Teil können Monomere auch im Polymerisationsgefäß vor Beginn der Polymerisation vorgelegt werden. Vorzugsweise werden maximal 30 Gew. % der Gesamtmenge der Monomeren, besonders bevorzugt maximal 20 Gew. %, ganz besonders bevorzugt maximal 10 Gew. % der Monomeren im Polymerisationsgefäß vorgelegt. Die übrigen Monomeren, d.h. vorzugsweise mindestens 70 Gew. %, besonders bevorzugt mindestens 80 Gew. %, ganz besonders bevorzugt mindestens 90 Gew. % werden während der Polymerisation kontinuierlich zugegeben. In einer besonderen Ausführungsform werden keine Monomeren vorgelegt, d.h. die Gesamtmenge der Monomere wird während der Polymerisation zugefahren. Die einzelnen Komponenten können dem Reaktor beim Zulaufverfahren von oben, in der Seite oder von unten durch den Reaktorboden zugegeben werden.

Zur Entfernung der Restmonomeren kann auch nach dem Ende der eigentlichen Emulsionspolymerisation, d. h. nach einem Umsatz aller Monomeren weiterer Initiator zugesetzt werden (chemische Desodorierung). Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Das so hergestellte Polymer wird vorzugsweise in Form seiner wässrigen Dispersion verwendet.

Die Größenverteilung der Dispersionsteilchen kann monomodal, bimodal oder multimodal sein. Bei monomodaler Teilchengrößenverteilung ist die mittlere Teilchengröße der in der wässrigen Dispersion dispergierten Polymerteilchen vorzugsweise kleiner 400 nm, insbesondere kleiner 300 nm. Besonders bevorzugt liegt die mittlere Teilchengröße zwischen 140 und 300 nm. Unter mittlerer Teilchengröße wird hier der d₅₀-Wert der Teilchengrößenverteilung verstanden, d.h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Bei bi- oder multimodaler Teilchengrößenverteilung kann die Teilchengröße bis zu 1000 nm betragen. Der pH-Wert der Polymerdispersion wird vorzugsweise auf pH größer 4,5, insbesondere auf einen pH-Wert zwischen 5 und 8 eingestellt.

Die erfindungsgemäße Haftklebstoffdispersion kann Additive enthalten. Die Additive sind z.B. ausgewählt aus Füllstoffen, Farbstoffen, Verlaufshilfsmitteln, Verdickern, vorzugsweise Assoziativverdicker, Entschäumer, Weichmachern, Pigmenten, Netzmitteln, UV-Schutzmitteln und Tackifiern. Für eine bessere Benetzung von Oberflächen können die Haftklebstoffe insbesondere Benetzungshilfsmittel, z. B. Fettalkoholethoxylate, Alkylphenolethoxylate, Sulfobernsteinsäureester, Nonylphenolethoxylate, Polyoxyethylene/-propylene oder Natriumdodecylsulfonate enthalten. Die Menge beträgt im allgemeinen 0,05 bis 5 Gew.-Teile, insbesondere 0,1 bis 3 Gew.-Teile auf 100 Gew.-Teile Polymer (fest).

Tackifier sind dem Fachmann an sich bekannt. Es handelt sich dabei um Zusatzstoffe für Klebstoffe oder Elastomere, die deren Autoadhäsion (Tack, Eigenklebrigkeit, Selbsthaftung) erhöhen. Sie haben in der Regel eine relativ niedrige Molmasse (Mn ca. 200 - 2000 g/mol), eine Glasübergangstemperatur, die oberhalb derjenigen der Elastomere liegt und eine ausreichende Verträglichkeit mit diesen, d.h. die Tackifier lösen sich zumindest teilweise in aus den Elastomeren gebildeten Polymerfilmen. Die Gewichtsmenge der Tackifier beträgt vorzugsweise 5 bis 100 Gew.-Teile, besonders bevorzugt 10 bis 50 Gew.-Teile, bezogen auf 100 Gew.-Teile Polymer (fest/fest). Geeignete Tackifier sind z.B. solche auf Basis von Naturharzen, wie z.B. Kolophoniumharze. Tackifier auf Basis von Naturharzen umfassen die Naturharze selber sowie deren beispielsweise durch Disproportionierung oder Isomerisierung, Polymerisation, Dimerisation oder Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propantriol, Pentaerythrit. Des weiteren finden auch Phenol-Harze, Kohlenwasserstoffharze, z.B. Cumaron-Inden-Harze, Polyterpen-Harze, Terpen-Oligomere, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung als Tackifier. Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈-Alkyl(meth)acrylaten. Bevorzugte Tackifier sind natürliche oder chemisch modifizierte Kolophoniumharze. Kolophoniumharze bestehen zum überwiegenden Teil aus Abietinsäure oder Abietinsäurederivaten.

Erfindungsgemäße Haftklebstoffdispersionen können zur Herstellung von Klebstoffartikeln, bzw. selbstklebend ausgerüsteten Artikeln verwendet werden. Bei dem Klebstoffartikel kann es sich um ein Etikett handeln. Ein bevorzugtes Etikett ist ein selbstklebendes Papieretikett oder Folienetikett, wobei der Klebstoff auf Papier oder auf eine Folie als Trägermaterial aufgetragen ist. Bei dem Klebstoffartikel kann es sich auch um ein Klebeband handeln, wobei der Klebstoff auf einem bandförmigen Trägermaterial aufgetragen ist. Bei dem Trägermaterial des Klebebandes kann es sich um Gewebe, Vliese, Folien, Papier, Filze, Schaumstoffe und Coextrudate oder Kombinationen davon handeln. Anwendungsgebiete sind trägerlose, einseitige und doppelseitige Klebebänder, medizinische Klebebänder, Verpackungsklebebänder, Kabelwickelbänder, Teppichverlegebänder, Montageklebebänder, Klebebänder zur Fixierung von Dachunterspannbahnen, selbstklebend ausgerüstete Trägermaterialien wie z.B. Schaumstoffe, Bitumenplatten und ähnliches. Gegenstand der Erfindung ist daher auch die Verwendung erfindungsgemäßer Haftklebstoffdispersionen zur Herstellung von selbstklebenden Artikeln, insbesondere zur Herstellung von Klebebändern zur Fixierung von Bauteilen, insbesondere im Automobilbau, für Elektronikartikel oder bei Bauanwendungen.

Zur Herstellung der Klebstoffartikel kann eine Klebstoffschicht auf das Trägermaterial in üblicher Weise aufgebracht werden, z. B. durch Rollen, Rakeln, Streichen etc. Im Falle der Verwendung einer wässrigen Klebstoffdispersion kann das Wasser durch Trocknung bei z.B. 50 bis 150°C entfernt werden. Die so erhaltenen, beschichteten Substrate werden z.B. als Selbstklebeartikel, wie Etiketten, Klebebänder oder Folien verwendet. Die Träger können hierzu vor oder nach dem Aufbringen des Klebstoffs zu Klebebändern, Etiketten oder Folien geschnitten werden. Zur späteren Verwendung kann die mit Haftklebstoff beschichtete Seite der Substrate, mit einem Releasepapier, z. B. mit einem silikonisierten Papier, abgedeckt werden.

Gegenstand der Erfindung ist auch ein Klebeband, welches mindestens eine Trägerschicht aufweist und ein- oder beidseitig mit mindestens einer erfindungsgemäßen Haftklebstoffdispersion beschichtet ist. Bevorzugte Trägermaterialien für die Herstellung von Klebebändern sind Polyethylen (PE), orientiertes Polypropylen (oPP), Polyethylenterephtalat (PET), PE-Schaum und Polyurethan-Schaum (PU-Schaum).

Für die Herstellung von Klebebändern ist das auf Feststoffgehalt bezogene Auftragsgewicht der Haftklebstoffdispersion vorzugsweise mindestens 20 g/m² oder mindestens 30 g/m², z.B. 60 bis 80 g/m².

In einer Ausführungsform der Erfindung handelt es sich umein Klebeband, bei welchem das Material der Trägerschicht ausgewählt ist aus PE, oPP, PET, PE-Schaum oder PU-Schaum und/oder das Klebeband mindestens eine die Klebstoffschicht abdeckende, ablösbare Schutzschicht aufweist.

Die erfindungsgemäßen Klebeartikel haben sehr gute Klebeeigenschaften, insbesondere eine gute Wärmestandfestigkeit und eine gute Wasserfestigkeit.

### Beispiele

### Einsatzstoffe:

- nBA: n-Butylacrylat
- EHA: 2-Ethylhexylacrylat
- MMA: Methylmethacrylat
- MA: Methylacrylat
- UMA: Ureidomethacrylat (2-(2-Oxoimidazolidin-1-yl)ethylmethacrylat)
- AS: Acrylsäure
- HPA: 2-Hydroxypropylacrylat
- VAc: Vinylacetat
- Saat: 30 nm Styrolsaat

### Anwendungstechnische Prüfungen:

Die Haftklebstoffe wurden mit einer Auftragsmenge von 75 g/m² auf PET-Folie Hostaphan® RN 36 als Träger beschichtet und 5 Minuten bei 90°C getrocknet. Der mit Haftklebstoff beschichtete Träger wurde in 25 mm breite Prüfstreifen geschnitten.

### a) Scherfestigkeit

Zur Bestimmung der Scherfestigkeit wurden die Prüfstreifen mit einer verklebten Fläche von 25 x 25 mm auf Stahlblech geklebt, mit einer 1 kg schweren Rolle 1 mal angerollt und anschließend hängend mit einem 1 kg Gewicht belastet. Die Scherfestigkeit (Kohäsion) wurde bei Normklima (23°C; 50% rel. Luftfeuchtigkeit) und bei 70°C bestimmt. Das Maß für die Scherfestigkeit ist die Zeit in Stunden bis zum Abfallen des Gewichts; es wurde jeweils der Durchschnitt aus 5 Messungen berechnet.

### b) S.A.F.T.-Test

Die Prüfstreifen wurden mit einer verklebten Fläche von 25 x 25 mm auf AFERA-Stahl geklebt, mit einer 2 kg schweren Rolle 4 mal angerollt und nach mindestens 16 Stunden Kontaktzeit hängend mit einem 1 kg Gewicht belastet. Während der Belastung wurde ausgehend von 23°C kontinuierlich mit einer Rate von 0,5°C / min aufgeheizt. Die beim Abfallen des Gewichtes erreichte Aufheiztemperatur ist ein Maß für die Wärmestandfestigkeit des Klebstoffs. Es wurde jeweils der Durchschnitt aus 3 Messungen berechnet.

### c) Wasserfestigkeit

Zur Messung der Wasserfestigkeit der Verklebungen wurde die Verankerung von mit dem zu prüfenden Haftklebstoff beschichtetem Substrat auf einer 30 µm Aluminiumfolie nach Lagerung in Wasser getestet. Die Auftragsmenge des Klebstoffs beträgt 40 g/m². Das Maß für die Wasserfestigkeit ist die Zeit, ab der ein Abrubbeln des Substrats von dem Aluminiumträger möglich wird.

### Beispiel 1

Es wurden nicht-erfindungsgemäße Haftklebstoffdispersionen D1 bis D3 durch einstufige Emulsionspolymerisation aus den in Tabelle 1 wiedergegebenen Monomerzusammensetzungen hergestellt.

**Tabelle 1: Monomerzusammensetzungen zur Herstellung der Haftklebstoffdispersionen D1 bis D3, Mengenangaben in Gewichtsteilen**

| | D1 | D2 | D3 |
|---|---|---|---|
| Saat | 0,4 | 0,4 | 0,4 |
| nBA | 87,75 | 87,75 | 87,75 |
| MMA | 7,8 | 6,8 | 5,85 |
| UMA | - | 1,0 | 1,95 |
| AS | 1,5 | 1,5 | 1,5 |
| Styrol | 1,0 | 1,0 | 1,0 |
| HPA | 1,95 | 1,95 | 1,95 |

Die Testergebnisse der Scherfestigkeit und der Wärmestandfestigkeit sind in Tabelle 2 zusammengefasst.

**Tabelle 2: Testergebnisse D1-D3**

| | Scherfestigkeit 23°C [Stunden] | Scherfestigkeit 70°C [Stunden] | S.A.F.T.-Test | Wasserfestigkeit |
|---|---|---|---|---|
| D1 (ohne UMA) | 0,7 | 0,1 | 38°C | 1,5 h |
| D2 (1 pphm UMA) | > 100 | 8,2 | 121°C | 1,5 h |
| D3 (2 pphm UMA) | >100 | 4,8 | 121°C | 1,5 h |

| | | | | |
|---|---|---|---|---|
| pphm: parts per hundert parts monomer; Gew.-Teile pro 100 Gew.-Teile Monomer | | | | |

Die Wasserfestigkeit wird durch Zusatz von Monomer b) nicht verbessert. Die Ergebnisse zeigen, dass die Verwendung eines Monomers des Typs b) zu einer verbesserten Wärmestandfestigkeit des Klebstoffs führen.

### Beispiel 2

Es wurden eine nicht-erfindungsgemäße Haftklebstoffdispersion D4 einstufig und erfindungsgemäße Haftklebstoffdispersionen D5 und D6 zweistufig durch Emulsionspolymerisation aus den in Tabelle 3 wiedergegebenen Monomerzusammensetzungen hergestellt.

**Tabelle 3: Monomerzusammensetzungen zur Herstellung der Haftklebstoffdispersionen D4 bis D6, Mengenangaben in Gewichtsteilen**

| | D4 | D5 | D6 |
|---|---|---|---|
| 1.Stufe | | | |
| Saat | 0,4 | 0,4 | 0,4 |
| nBA | 87,75 | 87,75 | 87,75 |
| MMA | 6,825 | 2,925 | 2,925 |
| UMA | 0,975 | 0,975 | 0,975 |
| AS | 1,5 | 1,5 | 1,5 |
| Styrol | 0,9 | 1 | 1 |
| HPA | 1,95 | 1,95 | 1,95 |
| 2.Stufe | - | | |
| MMA | - | 3,9 | - |
| EA | - | - | 3,9 |

Die Testergebnisse der Scherfestigkeit, Wärmestandfestigkeit und Wasserfestigkeit sind in Tabelle 4 zusammengefasst.

**Tabelle 4: Testergebnisse D4-D6**

| | Scherfestigkeit 23°C [Stunden] | Scherfestigkeit 70°C [Stunden] | S.A.F.T.-Test | Wasserfestigkeit |
|---|---|---|---|---|
| D4 (einstufig) | > 100 | 8,2 | 120°C | 1,5 h |
| D5 (zweistufig) | > 100 | 19,3 | 116 °C | > 4 d |
| D6 (zweistufig) | >100 | 11,0 | 112 °C | >4 d |

Die Ergebnisse zeigen, dass eine zweistufige Polymerisation zu einer deutlich verbesserten Wasserfestigkeit des Klebstoffs führt.

### Beispiel 3

Weitere Beispiele für Zusammensetzung und Herstellungsweise von erfindungsgemäßen Haftklebstoffdispersionen sind in Tabelle 5 wiedergegeben.

**Tabelle 5: Monomerzusammensetzungen zur Herstellung der Haftklebstoffdispersionen D7 bis D26, Mengenangaben in Gewichtsteilen**

| | D7 | D8 | D9 | D10 | D11 | D12 | D13 | D14 |
|---|---|---|---|---|---|---|---|---|
| 1.Stufe | | | | | | | | |
| nBA | 87,5 | 87,5 | 87,5 | 87,5 | | | | |
| EHA | | | | | 58 | 58 | 58 | 58 |
| MMA | 3 | 3 | 3 | 3 | 3 | 3 | 3 | 3 |
| EA | | | | | 29,5 | 29,5 | 29,5 | 29,5 |
| UMA | 1 | 1 | 1 | 1 | 1 | 1 | 1 | 1 |
| AS | 1,5 | 1,5 | 1,5 | 1,5 | 1,5 | 1,5 | 1,5 | 1,5 |
| Styrol | 1 | 1 | 1 | 1 | 1 | 1 | 1 | 1 |
| HPA | 2 | 2 | 2 | 2 | 2 | 2 | 2 | 2 |
| 2.Stufe | | | | | | | | |
| EA | 4 | | | | 4 | | | |
| MA | | 4 | | | | 4 | | |
| Styrol | | | 4 | | | | 4 | |
| MMA | | | | 4 | | | | 4 |

**Tabelle 5: Fortsetzung**

| | D15 | D16 | D17 | D18 | D19 | D20 | D21 | D22 |
|---|---|---|---|---|---|---|---|---|
| 1.Stufe | | | | | | | | |
| nBA | | | | | | | | |
| EHA | 66,5 | 66,5 | 66,5 | 66,5 | 69,5 | 69,5 | 69,5 | 69,5 |
| MMA | 3 | 3 | 3 | 3 | 3 | 3 | 3 | 3 |
| MA | 21 | 21 | 21 | 21 | 29,5 | 29,5 | 29,5 | 29,5 |
| VAc | | | | | 18 | 18 | 18 | 18 |
| UMA | 1 | 1 | 1 | 1 | 1 | 1 | 1 | 1 |
| AS | 1,5 | 1,5 | 1,5 | 1,5 | 1,5 | 1,5 | 1,5 | 1,5 |
| Styrol | 1 | 1 | 1 | 1 | 1 | 1 | 1 | 1 |
| HPA | 2 | 2 | 2 | 2 | 2 | 2 | 2 | 2 |
| 2. Stufe | | | | | | | | |
| EA | 4 | | | | 4 | | | |
| MA | | 4 | | | | 4 | | |
| Styrol | | | 4 | | | | 4 | |
| MMA | | | | 4 | | | | 4 |

**Tabelle 5: Fortsetzung**

| | D23 | D24 | D25 | D26 |
|---|---|---|---|---|
| 1.Stufe | | | | |
| nBA | 87,5 | | | |
| EHA | | 58 | 66,5 | 69,5 |
| MMA | 3 | 3 | 3 | 3 |
| MA | | | 21 | |
| VAc | | | | 18 |
| EA | | 29,5 | | |
| UMA | 1 | 1 | 1 | 1 |
| AS | 1,5 | 1,5 | 1,5 | 1,5 |
| Styrol | 1 | 1 | 1 | 1 |
| HPA | 2 | 2 | 2 | 2 |
| 2.Stufe | | | | |
| nBA | 2 | 2 | 2 | 2 |
| EA | | | | |
| MA | | | | |
| Styrol | 2 | 2 | 2 | 2 |
| MMA | | | | |

Es wurde gefunden, dass die Lagerstabilität der Klebstofflaminate deutlich erhöht werden kann, wenn zur Polymerisation mehr als 1 Gew.% an (Meth)acrylatmonomeren b) eingesetzt werden. So führt beispielsweise der Einsatz von 2 Gewichtsteilen UMA anstelle von 1 Gewichtsteil zu einer Erhöhung der Scherfestigkeit (gemessen bei 23°C nach einer Lagerung für 1 Tag bei 70°C) von ca. 45 Stunden (1 Gew.% UMA) auf Werte von über 100 Stunden (2 Gew.% UMA).

## Patentansprüche

1. Haftklebstoffdispersion, enthaltend mindestens ein in Wasser dispergiertes Polymer P1, welches gebildet ist durch Emulsionspolymerisation aus einem Monomergemisch, enthaltend
(a) mindestens 60 Gew.% mindestens eines C4 bis C20 Alkyl(meth)acrylats, welches, wenn es als Homopolymer polymerisiert ist, eine Glasübergangstemperatur (DSC) von -30 °C oder weniger aufweist,
(b) mindestens 0,05 Gew.% mindestens eines Monomeren ausgewählt aus der Gruppe bestehend aus (Meth)acrylatmonomeren mit einem Substituenten der Formel 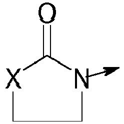 wobei X für CH₂, O, NH oder NR steht und R für eine C1 bis C4-Alkylgruppe steht,
(c) mindestens 0,1 Gew.% mindestens eines Säuremonomers,
wobei die Angaben der Monomermengen jeweils auf die Summe aller Monomere bezogen sind,
und wobei das Polymer P1 durch Polymerisation in mindestens 2 Stufen hergestellt ist, wobei die Glasübergangstemperatur eines Polymers aus Monomeren der ersten Stufe um mindestens 20 °C niedriger liegt als die Glasübergangstemperatur eines Polymeren aus Monomeren einer späteren, zweiten Stufe, und wobei als Monomere der zweiten Stufe entweder Methylmethacrylat, Methylacrylat, Styrol oder Ethylacrylat oder deren Gemisch eingesetzt werden.

2. Haftklebstoffdispersion gemäß Anspruch 1, **dadurch gekennzeichnet, dass** die Monomeren (a) aus gewählt sind aus n-Butylacrylat, n-Hexylacrylat, Octylacrylat und 2-Ethylhexylacrylat sowie Mischungen dieser Monomere.

3. Haftklebstoffdispersion gemäß einem der vorhergehenden Ansprüche, **dadurch gekennzeichnet, dass** das Monomer (b) Ureidoethylmethacrylat ist.

4. Haftklebstoffdispersion gemäß einem der vorhergehenden Ansprüche, **dadurch gekennzeichnet, dass** die Säuremonomeren (c) ausgewählt sind aus Acrylsäure und Methacrylsäure.

5. Haftklebstoffdispersion gemäß einem der vorhergehenden Ansprüche, **dadurch gekennzeichnet, dass** das Monomerengemisch weitere Monomere (d) enthält, die wenn sie als Homopolymere polymerisiert sind, eine Glasübergangstemperatur (DSC) von mehr als -30 °C aufweisen und ausgewählt sind aus von den Monomeren (a) verschiedenen C1 bis C20 Alkyl(meth)acrylaten, C1 bis C20 Hydroxyalkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

6. Haftklebstoffdispersion gemäß einem der vorhergehenden Ansprüche, **dadurch gekennzeichnet, dass** die Monomeren (a) in einer Menge von 60 bis 95 Gew.% die Monomeren (b) in einer Menge von 0,1 bis 5 Gew.%, die Monomeren (c) in einer Menge von 0,1 bis 5 Gew.%, die weiteren Monomeren (d) in einer Menge von 2 bis 30 Gew.% vorliegen.

7. Haftklebstoffdispersion gemäß einem der vorhergehenden Ansprüche, **dadurch gekennzeichnet, dass** die Dispersion Additive enthält, ausgewählt aus Füllstoffen, Farbstoffen, Verlaufshilfsmitteln, Verdickern, Entschäumer, Weichmachern, Pigmenten, Netzmitteln, UV-Schutzmitteln und Tackifiern.

8. Haftklebstoffdispersion gemäß einem der vorhergehenden Ansprüche, **dadurch gekennzeichnet, dass** die Glasübergangstemperatur eines Polymers aus Monomeren der ersten Stufe kleiner oder gleich -30°C und die Glasübergangstemperatur eines Polymeren aus Monomeren einer späteren, zweiten Stufe mehr als -10°C beträgt.

9. Haftklebstoffdispersion gemäß einem der vorhergehenden Ansprüche, **dadurch gekennzeichnet, dass** die Glasübergangstemperatur eines Polymers aus Monomeren der ersten Stufe kleiner oder gleich -40°C und die Glasübergangstemperatur eines Polymeren aus Monomeren einer späteren, zweiten Stufe mehr als 0°C beträgt.

10. Klebeband welches mindestens eine Trägerschicht aufweist und ein- oder beidseitig mit mindestens einer Haftklebstoffdispersion gemäß einem der vorhergehenden Ansprüche beschichtet ist.

11. Klebeband nach dem vorhergehenden Anspruch, **dadurch gekennzeichnet, dass** das auf Feststoffgehalt bezogene Auftragsgewicht der Haftklebstoffdispersion mindestens 30 g/m² beträgt.

12. Klebeband nach einem der beiden vorhergehenden Ansprüche, **dadurch gekennzeichnet, dass** das Material der Trägerschicht ausgewählt ist aus Polyethylen, orientiertem Polypropylen, Polyethylenterephtalat, PE-Schaum und Polyurethan-Schaum und/oder das Klebeband mindestens eine die Klebstoffschicht abdeckende, ablösbare Schutzschicht aufweist.

13. Verwendung einer Haftklebstoffdispersion nach einem der Ansprüche 1 bis 9 zur Herstellung von selbstklebenden Artikeln.

14. Verwendung einer Haftklebstoffdispersion nach einem der Ansprüche 1 bis 9 oder eines Klebebandes nach einem der Ansprüche 10 bis 12 zur Fixierung von Bauteilen, insbesondere im Automobilbau, für Elektronikartikel oder bei Bauanwendungen.

## Claims

1. A pressure-sensitive adhesive dispersion comprising at least one water-dispersed polymer P1 formed by emulsion polymerization from a monomer mixture comprising
(a) at least 60% by weight of at least one C4 to C20 alkyl (meth)acrylate which when polymerized as a homopolymer has a glass transition temperature (DSC) of -30°C or less,
(b) at least 0.05% by weight of at least one monomer selected from the group consisting of (meth)acrylate monomers having a substituent of the formula 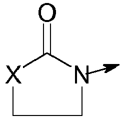 where X is CH₂, O, NH or NR and R is a C1 to C4 alkyl group,
(c) at least 0.1% by weight of at least one acid monomer,
the figures for the monomer amounts being based in each case on the sum of all monomers,
and the polymer P1 being prepared by polymerization in at least 2 stages,
the glass transition temperature of a polymer from monomers of the first stage being at least 20°C lower than the glass transition temperature of a polymer from monomers of a later, second stage, and either methyl methacrylate, methyl acrylate, styrene or ethyl acrylate or mixtures thereof being used as monomers of the second stage.

2. The pressure-sensitive adhesive dispersion according to claim 1, wherein the monomers (a) are selected from n-butyl acrylate, n-hexyl acrylate, octyl acrylate, and 2-ethylhexyl acrylate, and mixtures of these monomers.

3. The pressure-sensitive adhesive dispersion according to either of the preceding claims, wherein the monomer (b) is ureidoethyl methacrylate.

4. The pressure-sensitive adhesive dispersion according to any of the preceding claims, wherein the acid monomers (c) are selected from acrylic acid and methacrylic acid.

5. The pressure-sensitive adhesive dispersion according to any of the preceding claims, wherein the monomer mixture comprises further monomers (d) which when polymerized as homopolymers have a glass transition temperature (DSC) of more than -30°C and are selected from the non- (a) monomers C1 to C20 alkyl (meth)acrylates, C1 to C20 hydroxyalkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, or mixtures of these monomers.

6. The pressure-sensitive adhesive dispersion according to any of the preceding claims, wherein the monomers (a) are present in an amount of 60% to 95% by weight, the monomers (b) in an amount of 0.1% to 5% by weight, the monomers (c) in an amount of 0.1% to 5% by weight, the further monomers (d) in an amount of 2% to 30% by weight.

7. The pressure-sensitive adhesive dispersion according to any of the preceding claims, wherein the dispersion comprises additives selected from fillers, dyes, flow control assistants, thickeners, defoamers, plasticizers, pigments, wetting agents, UV protectants, and tackifiers.

8. The pressure-sensitive adhesive dispersion according to any of the preceding claims, wherein the glass transition temperature of a polymer from monomers of the first stage is less than or equal to -30°C and the glass transition temperature of a polymer from monomers of a later, second stage is more than -10°C.

9. The pressure-sensitive adhesive dispersion according to any of the preceding claims, wherein the glass transition temperature of a polymer from monomers of the first stage is less than or equal to -40°C and the glass transition temperature of a polymer from monomers of a later, second stage is more than 0°C.

10. An adhesive tape which has at least one carrier layer and is coated on one or both sides with at least one pressure-sensitive adhesive dispersion according to any of the preceding claims.

11. The adhesive tape according to the preceding claim, wherein the applied weight of the pressure-sensitive adhesive dispersion, based on solids content, is at least 30 g/m².

12. The adhesive tape according to either of the two preceding claims, wherein the material of the carrier layer is selected from polyethylene, oriented polypropylene, polyethylene terephthalate, PE foam, and polyurethane foam, and/or the adhesive tape has at least one detachable protective layer lining the layer of adhesive.

13. The use of a pressure-sensitive adhesive dispersion according to any of claims 1 to 9 for producing self-adhesive articles.

14. The use of a pressure-sensitive adhesive dispersion according to any of claims 1 to 9 or of an adhesive tape according to any of claims 10 to 12 for fixing components, more particularly in automobile construction, for electronics articles or in construction applications.

## Revendications

1. Dispersion d'adhésif de contact, contenant au moins un polymère P1 dispersé dans de l'eau, qui est formé par polymérisation en émulsion à partir d'un mélange de monomères, contenant :
(a) au moins 60 % en poids d'au moins un (méth)acrylate d'alkyle en C4 à C20 qui, lorsqu'il est polymérisé sous la forme d'un homopolymère, présente une température de transition vitreuse (DSC) de -30 °C ou moins,
(b) au moins 0,05 % en poids d'au moins un monomère choisi dans le groupe constitué par les monomères de (méth)acrylate contenant un substituant de formule 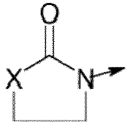 dans laquelle X représente CH₂, O, NH ou NR, et R représente un groupe alkyle en C1 à C4,
(c) au moins 0,1 % en poids d'au moins un monomère acide,
les indications des quantités de monomères se rapportant à chaque fois à la somme de tous les monomères,
et le polymère P1 étant fabriqué par polymérisation en au moins 2 étapes, la température de transition vitreuse d'un polymère des monomères de la première étape étant au moins 20 °C inférieure à la température de transition vitreuse d'un polymère des monomères d'une deuxième étape ultérieure ; et, en tant que monomères de la deuxième étape, le méthacrylate de méthyle, l'acrylate de méthyle, le styrène ou l'acrylate d'éthyle ou leur mélange étant utilisé.

2. Dispersion d'adhésif de contact selon la revendication 1, **caractérisée en ce que** les monomères (a) sont choisis parmi l'acrylate de n-butyle, l'acrylate de n-hexyle, l'acrylate d'octyle et l'acrylate de 2-éthylhexyle, ainsi que les mélanges de ces monomères.

3. Dispersion d'adhésif de contact selon l'une quelconque des revendications précédentes, **caractérisée en ce que** le monomère (b) est le méthacrylate d'uréidoéthyle.

4. Dispersion d'adhésif de contact selon l'une quelconque des revendications précédentes, **caractérisée en ce que** les monomères acides (c) sont choisis parmi l'acide acrylique et l'acide méthacrylique.

5. Dispersion d'adhésif de contact selon l'une quelconque des revendications précédentes, **caractérisée en ce que** le mélange de monomères contient des monomères (d) supplémentaires qui, lorsqu'ils sont polymérisés sous la forme d'homopolymères, présentent une température de transition vitreuse (DSC) supérieure à -30 °C, et sont choisis parmi les (méth)acrylates d'alkyle en C1 à C20 différents des monomères (a), les (méth)acrylates d'hydroxyalkyle en C1 à C20, les esters de vinyle d'acides carboxyliques contenant jusqu'à 20 atomes C, les composés aromatiques de vinyle contenant jusqu'à 20 atomes C, les nitriles éthyléniquement insaturés, les halogénures de vinyle, les éthers de vinyle d'alcools contenant de 1 à 10 atomes C, les hydrocarbures aliphatiques contenant 2 à 8 atomes C et une ou deux doubles liaisons ou les mélanges de ces monomères.

6. Dispersion d'adhésif de contact selon l'une quelconque des revendications précédentes, **caractérisée en ce que** les monomères (a) sont présents en une quantité de 60 à 95 % en poids, les monomères (b) en une quantité de 0,1 à 5 % en poids, les monomères (c) en une quantité de 0,1 à 5 % en poids, les monomères (d) supplémentaires en une quantité de 2 à 30 % en poids.

7. Dispersion d'adhésif de contact selon l'une quelconque des revendications précédentes, **caractérisée en ce que** la dispersion contient des additifs, choisis parmi les charges, les colorants, les adjuvants d'écoulement, les épaississants, les antimousses, les plastifiants, les pigments, les agents mouillants, les agents de protection contre les UV et les agents collants.

8. Dispersion d'adhésif de contact selon l'une quelconque des revendications précédentes, **caractérisée en ce que** la température de transition vitreuse d'un polymère des monomères de la première étape est inférieure ou égale à -30 °C et la température de transition vitreuse d'un polymère des monomères d'une deuxième étape ultérieure est supérieure à -10 °C.

9. Dispersion d'adhésif de contact selon l'une quelconque des revendications précédentes, **caractérisée en ce que** la température de transition vitreuse d'un polymère des monomères de la première étape est inférieure ou égale à -40 °C et la température de transition vitreuse d'un polymère des monomères d'une deuxième étape ultérieure est supérieure à 0 °C.

10. Bande adhésive qui comprend au moins une couche support et est revêtue sur un côté ou sur les deux côtés avec au moins une dispersion d'adhésif de contact selon l'une quelconque des revendications précédentes.

11. Bande adhésive selon la revendication précédente, **caractérisée en ce que** le poids d'application relatif à la teneur en solides de la dispersion d'adhésif de contact est d'au moins 30 g/m².

12. Bande adhésive selon l'une quelconque des deux revendications précédentes, **caractérisée en ce que** matériau de la couche support est choisi parmi le polyéthylène, le polypropylène orienté, le polytéréphtalate d'éthylène, la mousse de PE et la mousse de polyuréthane, et/ou la bande adhésive comprend au moins une couche de protection amovible, recouvrant la couche adhésive.

13. Utilisation d'une dispersion d'adhésif de contact selon l'une quelconque des revendications 1 à 9 pour la fabrication d'articles autocollants.

14. Utilisation d'une dispersion d'adhésif de contact selon l'une quelconque des revendications 1 à 9 ou d'une bande adhésive selon l'une quelconque des revendications 10 à 12 pour la fixation de composants, notamment dans la construction d'automobiles, pour des articles électroniques ou dans des applications dans le domaine du bâtiment.
